# EUROPÄISCHE PATENTSCHRIFT

(11) **EP 2 200 849 B1**
(45) Veröffentlichungstag und Bekanntmachung des Hinweises auf die Patenterteilung: **18.06.2014**
(21) Anmeldenummer: 08802027.6
(22) Anmeldetag: 11.09.2008
(51) Int. Cl.: B60J 5/04

(54) **Fahrzeugtür mit einem Aggregateträger**
Vehicle door with an equipment carrier
Support d'organes pour une portière de véhicule

(30) Priorität: 11.09.2007 DE 202007012702 U
(43) Veröffentlichungstag der Anmeldung: 30.06.2010
(73) Patentinhaber: Johnson Controls Interiors GmbH & Co. KG, 47929 Grefrath (DE)
(72) Erfinder: SCHIDAN, Alexander, 42719 Solingen (DE); MIEGLITZ, Hans-Helmut, 40789 Monheim (DE); MEYER, Thorsten, 47798 Krefeld (DE); GALAN, Jesus, 40237 Düsseldorf (DE); NUYAN, Vedat, 42287 Wuppertal (DE)
(74) Vertreter: Trinks, Ole
(86) Internationale Anmeldenummer: PCT/EP2008/007467
(87) Internationale Veröffentlichungsnummer: WO 2009/033675

(56) Entgegenhaltungen:
- EP-A- 0 579 535
- EP-A- 1 275 540
- DE-A1- 10 158 230
- DE-A1- 19 620 148
- DE-A1-102005 043 179
- DE-U1-202005 019 562
- DE-U1-202006 007 387
- US-A1- 2007 001 477

## Beschreibung

Die Erfindung betrifft einen Aggregateträger für ein Kraftfahrzeug, insbesondere für eine Fahrzeugtür, und eine Fahrzeugtür, wobei der Aggregateträger zur Aufnahme von Funktionskomponenten, insbesondere einer Fahrzeugtür, und zum Einbau in ein Kraftfahrzeug vorgesehen ist, wobei der Aggregateträger eine dem Innenraum des Fahrzeugs zugewandte erste Hauptseite aufweist und wobei der Aggregateträger eine gegenüberliegende zweite Hauptseite aufweist.

Derartige Aggregateträger sind allgemein bekannt. Beispielsweise ist aus der deutschen Offenlegungsschrift DE 101 58 230 A1 ein Aggregateträger für eine Kraftfahrzeugtür bekannt, wobei der Aggregateträger mindestens eine teilweise aus Kunststoff bestehende Oberfläche aufweist, die zur Aufnahme von Funktionskomponenten einer Kraftfahrzeugtür dient. Nachteilig hat sich bei solchen Aggregateträgern herausgestellt, dass ein erhöhter Aufwand zur Herstellung einer Türverkleidung für den Fall erforderlich ist, dass in der Türverkleidung sämtliche (von einem Benutzer der fertig montierten Fahrzeugtür in einer normalen Benutzungssituation sichtbaren) Sichtoberflächen (sogenannte A-Oberflächen) ausgebildet bzw. integriert werden. Weiterhin ist aus der Gattungsgemäßen Druckschrift EP 0 579 535 A1 eine Fahrzeugtür bekannt.

Eine Aufgabe der vorliegenden Erfindung ist daher, einen Aggregateträger für ein Kraftfahrzeug bereitzustellen, der im Zusammenspiel mit einer Türinnenverkleidung eine maximale Kostenreduzierung und Montagevereinfachung bei gleichzeitiger Aufrechterhaltung seiner Funktionalität hinsichtlich Langlebigkeit, Stabilität, Geräuscheigenschaften im Betrieb und dergleichen aufweist.

Die Aufgabe wird durch eine Fahrzeugtür mit einem Aggregateträger gemäß Anspruch 1 gelöst. Hierdurch kann in einfacher Weise der Aufwand zur Herstellung einer Türinnenverkleidung erheblich reduziert werden, weil beispielsweise die für einen Sitzinsassen in einer normalen Benutzungssituation der Fahrzeugtür vom Innenraum des Fahrzeugs her einsehbare Rückseite der Kartentasche der Fahrzeugtür als A-Oberfläche ausgebildet ist. Eine aufwändige mehrteilige Ausbildung der Türinnenverkleidung kann damit erfindungsgemäß vermieden werden. Ferner ist es erfindungsgemäß vorteilhaft möglich, dass mittels der Integration von A-Oberflächen in den Aggregateträger auch die Variantenvielfalt der Türinnenverkleidung - insbesondere hinsichtlich verschiedener Farbkombinationen - verringert wird und dass es zu einer Gewichtsreduzierung der Fahrzeugtür insgesamt kommt, weil eine Mehrfachnutzung möglich ist bzw. eine Funktionsintegration von neuen Funktionen in den Aggregateträger zugänglich ist.

Offenbart wird ferner ein Aggregateträger für eine Fahrzeugtür, wobei der Aggregateträger zur Aufnahme von Funktionskomponenten einer Fahrzeugtür und zum Einbau in ein Kraftfahrzeug vorgesehen ist, wobei der Aggregateträger eine dem Innenraum des Fahrzeugs zugewandte erste Hauptseite aufweist und wobei der Aggregateträger eine gegenüberliegende zweite Hauptseite aufweist, wobei der Aggregateträger auf der ersten und/oder der zweiten Hauptseite eine Mehrzahl von Hinterschnittbefestigungselementen aufweist. Hierdurch ist es möglich, dass eine erhebliche Anzahl von Funktionskomponenten und bevorzugt alle wesentlichen Funktionskomponenten bzw. sämtliche Funktionskomponenten in einfacher, sicherer und montagetechnisch sehr schneller Weise an dem Aggregateträger angebracht werden können. Insbesondere ist es nicht mehr notwendig, zusätzliche Befestigungselemente wie Schrauben oder dergleichen vorzusehen, weil aggregateträgerseitig und funktionskomponentenseitig entsprechende Maßnahmen bzw. Anformungen zur schnellen Montage erfindungsgemäß ausgebildet sind. Insbesondere gilt dies für das Türschlossmodul, das Lautsprechermodul und/oder ein Steuergerätemodul bzw. ein Gehäusemodul für ein Steuergerät.

Die Maßnahmen, wonach der Aggregateträger im Bereich der ersten Hauptseite wenigstens einen nach der Komplettmontage vom Innenraum des Fahrzeugs her sichtbaren Sichtseitenbereich aufweist bzw. wonach der Aggregateträger auf der ersten und/oder der zweiten Hauptseite eine Mehrzahl von Hinterschnittbefestigungselementen aufweist, können auch miteinander kombiniert vorgesehen sein.

Der Aggregateträger weist auf der ersten und/oder der zweiten Hauptseite Rastbefestigungselemente auf. Hierdurch ist es erfindungsgemäß möglich, dass im Wesentlichen alle Funktionsmodule der Fahrzeugtür am Aggregateträger befestigbar und damit einfach montierbar sind.

Weiterhin ist erfindungsgemäß bevorzugt, dass der Aggregateträger im Wesentlichen aus einem Material geformt vorgesehen ist, wobei insbesondere die Hinterschnittbefestigungselemente und die Rastbefestigungselemente aus dem Material des Aggregateträgers vorgesehen sind. Hierdurch ist eine einfache, schnelle und kostengünstige Herstellungsweise des Aggregateträgers möglich. Insbesondere kann erfindungsgemäß damit ein großer Aufwand, der durch die Benutzung der sogenannten Mehrschuss-Spritzguss-Technologie oder durch zusätzliche Bauteile anfallen würde, vermieden werden, weil auch die Rastbefestigungselemente und die Hinterschnittbefestigungselemente im Wesentlichen durch das Hauptmaterial des Aggregateträgers bzw. das hauptsächlich für den Aggregateträger verwendete Material realisiert sind bzw. angeformt sind.

Ferner ist erfindungsgemäß bevorzugt, dass das Material des Aggregateträgers als ein faserverstärktes oder einen Füllstoff aufweisendes Material vorgesehen ist, insbesondere ein Polypropylenmaterial und insbesondere mit Langfasern, besonders bevorzugt Glasfasern. Hierdurch können die Herstellungskosten für die Fahrzeugtür auch durch das verwendete Material des Aggregateträgers reduziert werden. Als weitere Kunststoffmaterialien kommen alternativ zu einem Polypropylenmaterial oder kumulativ zu einem Polypropylenmaterial auch die folgenden Materialien in Frage: Polystyrol, Polyethylen, Polycarbonat, Polyvenylchlorid.

Die Sichtseitenbereiche weisen im Oberflächenbereich ein die Sichtseite bildendes Folienmaterial auf, wobei das Folienmaterial insbesondere eine Narbung aufweist. Hierbei ist beim Folienmaterial insbesondere auf eine Wechselwirkung mit dem Material (bzw. Hauptmaterial) des Aggregateträgers dahingehend zu achten, dass eine gute Verbindung zwischen beiden über die Lebensdauer des Aggregateträgers bzw. des Kraftfahrzeugs gewährleistet ist und dass auch eine chemische Verträglichkeit und Recyclebarkeit gewährleistet ist. Als Material der Folie bzw. des Folienmaterials der Sichtseitenbereiche ist ein Polypropylen-Folienmaterial (ggf. mit einer äußeren Lackschicht) vorgesehen, wobei es sich bei dem Polypropylen-Folienmaterial bevorzugt um ein Folienmaterial mit mehreren miteinander verbundenen Schichten aus gegebenenfalls unterschiedlichen speziellen Polypropylenmaterialien handelt und wobei die Dicke des Folienmaterials der Sichtseitenbereiche, insbesondere im Bereich von etwa 50 Mikrometer bis etwa 2000 Mikrometer, bevorzugt im Bereich von etwa 100 Mikrometer bis etwa 1000 Mikrometer, besonders bevorzugt in einem Bereich von etwa 150 Mikrometer bis etwa 500 Mikrometer vorgesehen ist.

Ferner ist erfindungsgemäß bevorzugt, dass die Hinterschnittbefestigungselemente und die Rastbefestigungselemente zur Bewirkung einer Fixierung einer der Funktionskomponenten ausgehend von einer Vormontageposition in eine Endmontageposition relativ zum Aggregateträger durch Längsverschiebung oder durch Drehung vorgesehen sind. Hierdurch ist eine besonders einfache Montage der Funktionskomponenten an dem Aggregateträger möglich, so dass die Montagekosten gegenüber beispielsweise einer Schraubmontage der Funktionskomponenten erheblich reduzierbar sind.

Weiterhin ist erfindungsgemäß bevorzugt, dass als Funktionskomponenten wenigstens ein Türschlossmodul und/oder ein Lautsprecher und/oder ein Steuergerätegehäuse vorgesehen ist. Hierdurch ist es erfindungsgemäß möglich, dass im Wesentlichen alle bzw. sämtliche Funktionskomponenten - auch solche Funktionskomponenten, die aufgrund ihres Gewichts (wie zum Beispiel die Fahrzeugseitenscheibenverstellungskomponente, das Türschlossmodul oder der Lautsprecher) oder ihrer Festigkeitsvorgaben eine sichere und feste Anbindung bzw. Fixierung am Aggregateträger erfordern - in einfacher, schneller und kostengünstiger Weise am Aggregateträger anbringbar sind.

Ein weiterer Gegenstand der vorliegenden Erfindung ist eine Fahrzeugtür mit einem erfindungsgemäßen Aggregateträger, wobei die Fahrzeugtür eine im Wesentlichen einzige großflächige Türinnenverkleidung aufweist und wobei die Türinnenverkleidung zusammen mit dem Aggregateträger mindestens 80%, bevorzugt mindestens 90%, der Sichtseite definiert. Hierdurch kann in vorteilhafter Weise erreicht werden, dass beispielsweise eine Kartentasche oder ein Türzuziehgriff der Fahrzeugtür im Wesentlichen allein aus den (fahrzeuginnenseitig) einzigen beiden großflächigen Hauptkomponenten der Fahrzeugtür, nämlich dem Aggregateträger und der Türinnenverkleidung, realisiert werden kann, wobei durch die Integration von A-Oberflächen, d.h. Sichtseiten, auch in den Aggregateträger die Herstellung insbesondere der Türinnenverkleidung im Vergleich zu herkömmlichen Türinnenverkleidung mit einer integrierten Kartentasche erheblich reduzierbar ist.

Ausführungsbeispiele der Erfindung sind in der Zeichnung dargestellt und in der nachfolgenden Beschreibung näher erläutert.
- Figuren 1 bis 4: zeigen die erste Hauptseite bzw. die zweite Hauptseite bzw. verschiedene Ansichten eines erfindungsgemäßen Aggregateträgers.
- Figuren 5 bis 17: zeigen verschiedene Detaildarstellungen des erfindungsgemäßen Aggregateträgers bzw. der erfindungsgemäßen Fahrzeugtür.

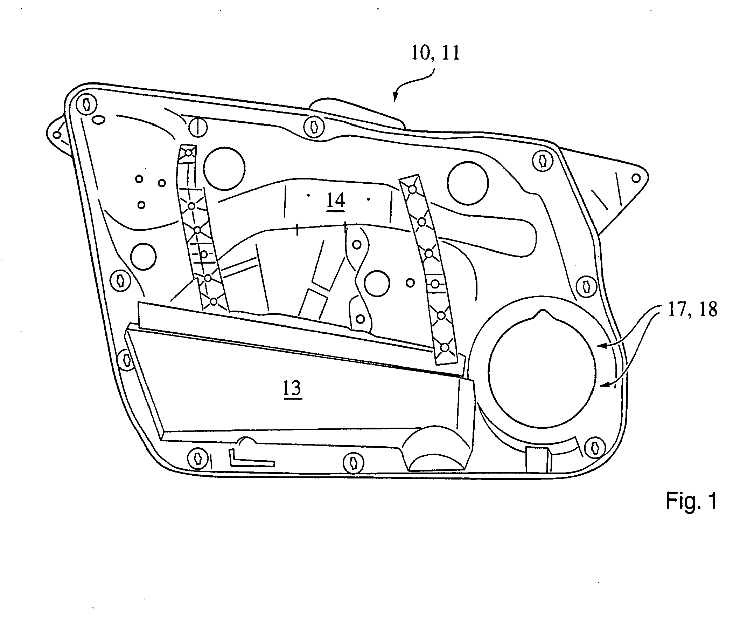

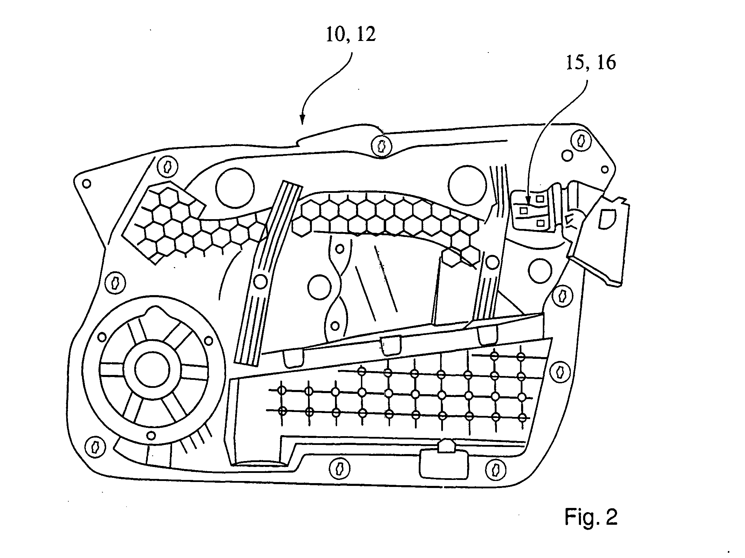

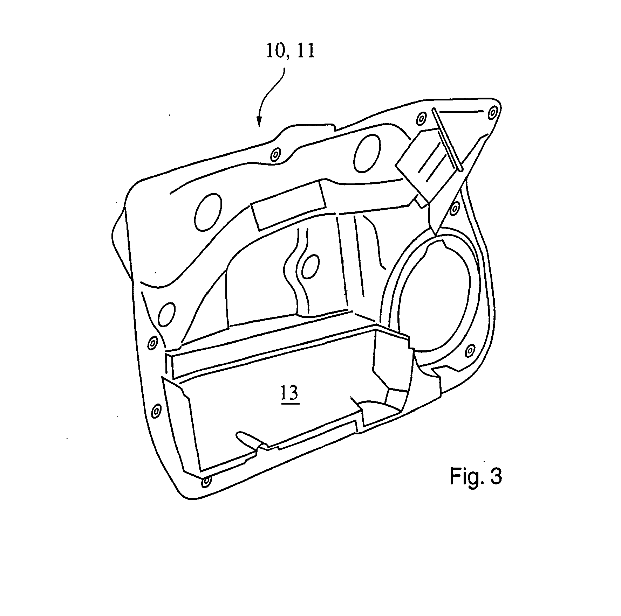

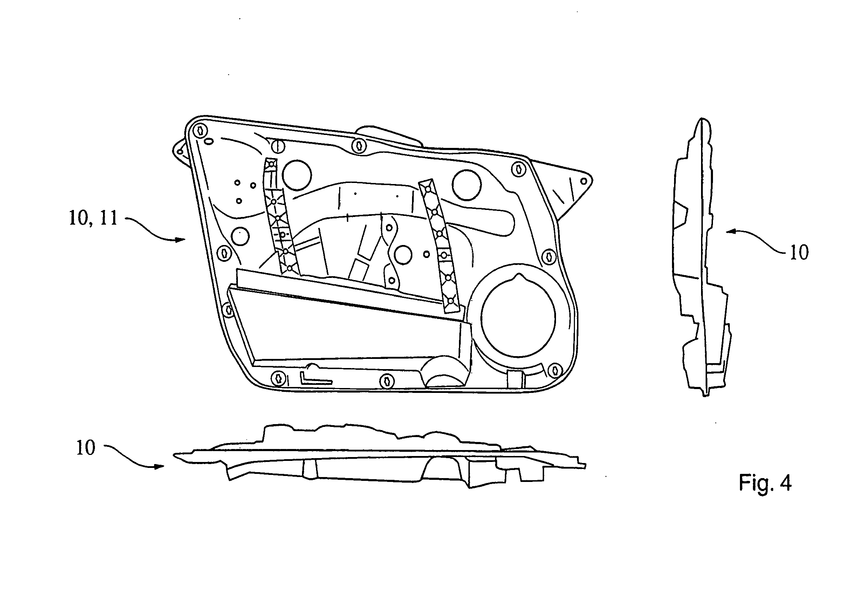

In den Figuren 1 und 2 ist ein Beispiel für einen erfindungsgemäßen Aggregateträger 10 in einer Ansicht der ersten Hauptseite 11 (Figur 1) bzw. der zweiten Hauptseite 12 (Figur 2) schematisch dargestellt. Die Figuren 3 und 4 zeigen weitere verschiedene schematische Darstellungen des Aggregateträgers 10.

Die erste Hauptseite 11 ist hierbei dem Innenraum eines nicht dargestellten Fahrzeugs zugewandt, während die zweite Hauptseite 12 der Außenseite der Fahrzeugtür zugewandt ist. Ein derartiger Aggregateträger 10, dient zur Aufnahme unterschiedlicher Funktionskomponenten, insbesondere einer Fahrzeugtür, wie beispielsweise einer Schlossbaugruppe, eines Türinnenöffners, eines Fensterhebers, eines Lautsprechers, eines Seitenairbagmoduls, etc. Der Aggregateträger 10 wird daher im Folgenden auch als Türmodulträger bezeichnet. Diese Funktionskomponenten oder auch Funktionsmodule sind bevorzugt vor dem Einbau des Aggregateträgers 10 in die Fahrzeugtür bzw. in die Karosserieanteile der Fahrzeugtür an dem Aggregateträger 10 vormontiert und gegebenenfalls im Hinblick auf ihre Funktionen, insbesondere elektrische Funktionen, vorgeprüft worden. Im Anschluss daran wird der Aggregateträger 10 zusammen mit den hieran vormontierten Funktionskomponenten als sogenanntes Türmodul in die zugehörige Kraftfahrzeugtür integriert. Zur zuverlässigen, dauerhaften Befestigung der Funktionskomponenten, an denen teilweise hohe Kräfte auftreten können, wie zum Beispiel im Fall eines Fensterhebers, eines Türschlossmoduls oder eines Türinnenöffners, muss der Aggregateträger 10 aus einem hinreichend stabilen und steifen Material bestehen.

Zur Anbindung der Funktionskomponenten an den Aggregateträger 10 sind an dem Aggregateträger 10 gemäß einer bevorzugten Ausführungsform der Erfindung eine Mehrzahl von Hinterschnittbefestigungselementen und/oder Rastbefestigungselementen vorgesehen. In Figur 1 ist beispielhaft hierfür auf der ersten Hauptseite 11 ein zweites Hinterschnittbefestigungselement 17 und ein zweites Rastbefestigungselement 18, beide zur Fixierung eines Lautsprechers bzw. eines Lautsprechermoduls, dargestellt und es ist in der Figur 2 auf der zweiten Hauptseite 12 ein erstes Hinterschnittbefestigungselement 15 und ein erstes Rastbefestigungselement 16, beide zur Fixierung eines Türschlossmoduls, dargestellt.

Die erste Hauptseite 11 des Aggregateträgers 10 weist gemäß einer weiteren bevorzugten Ausführungsform wenigstens einen Sichtseitenbereich auf. In Figur 1 ist beispielhaft hierfür ein erster Sichtseitenbereich 13 im Bereich der Kartentasche der Fahrzeugtür (bzw. insbesondere der Kartentaschenrückwand) dargestellt und es ist ferner ein zweiter Sichtseitenbereich 14 im Bereich des Zuziehgriffs dargestellt. Alternativ oder kumulativ hierzu ist es erfindungsgemäß auch möglich (jedoch nicht dargestellt), dass weitere Sichtseitenbereiche vorgesehen sind, beispielsweise im Bereich des Lautsprechers (Rand bzw. Umfassung des Lautsprechers in Einbauposition) und/oder im Bereich der Türinnenbetätigung.

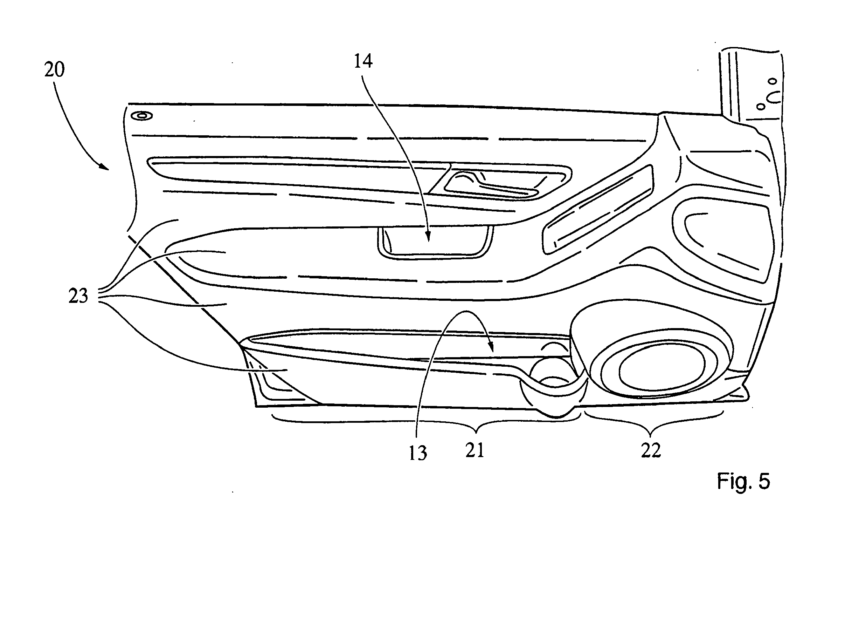

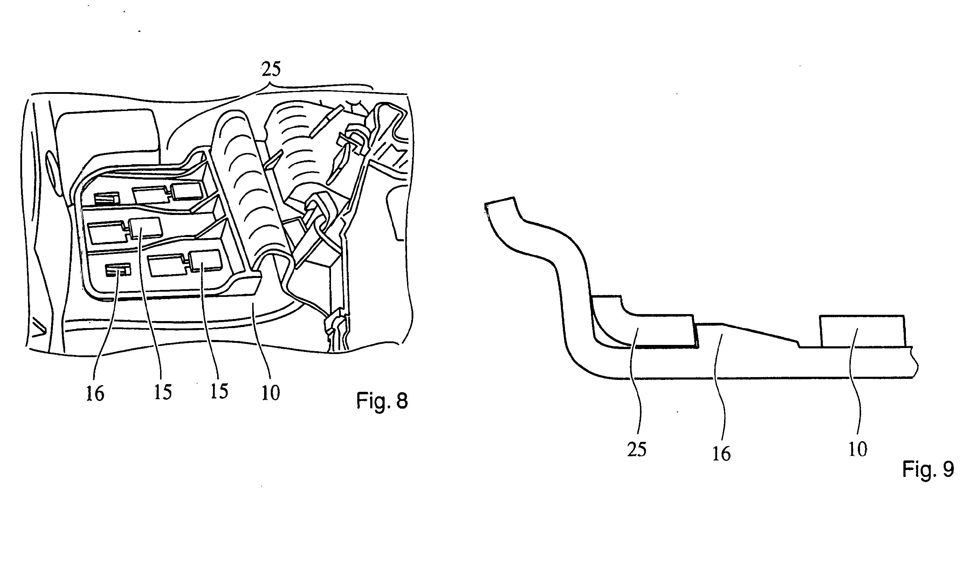

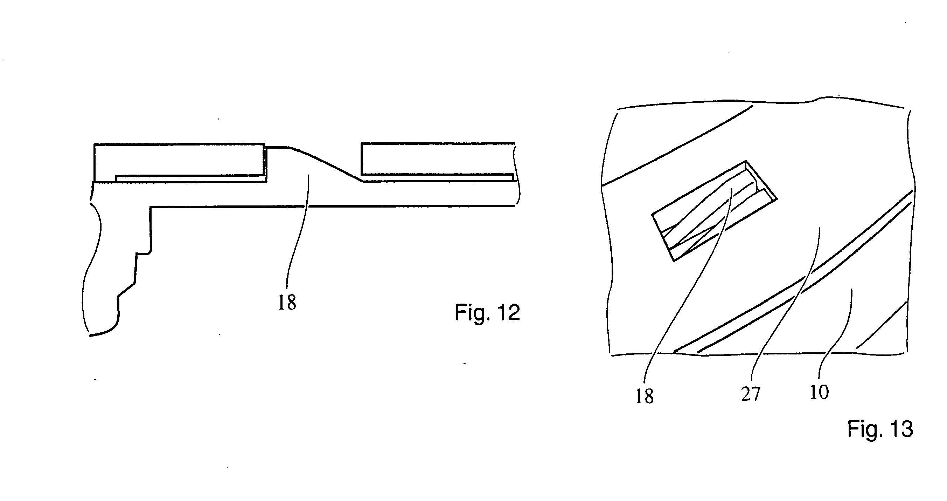

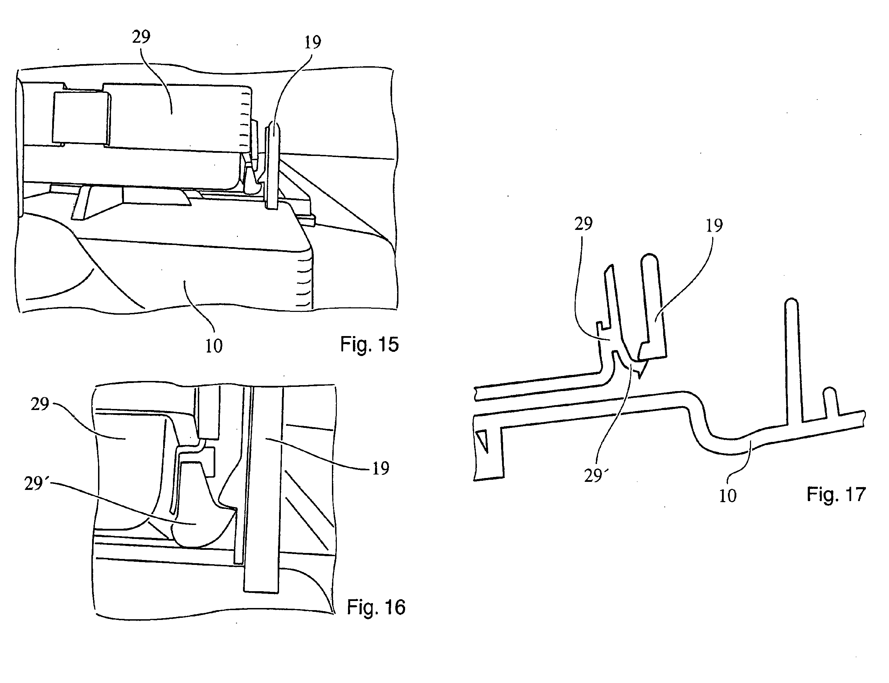

In den Figuren 5 bis 17 sind Detaildarstellungen des erfindungsgemäßen Aggregateträgers 10 dargestellt. Hierbei zeigt die Figur 5 eine schematische und perspektivische Darstellung einer fertig montierten Fahrzeugtür 20 mit einem erfindungsgemäßen Aggregateträger 10, wobei der Aggregateträger 10 im dargestellten Beispiel an den Stellen der ersten bzw. zweiten Sichtseitenbereiche 13, 14 sichtbar ist. Für den größten Teil der A-Oberfläche der Fahrzeugtür 20 - erfindungsgemäß bevorzugt wenigstens etwa 80% bzw. wenigstens etwa 90% - wird die A-Oberfläche der fertig montierten Fahrzeugtür 20 durch eine Türinnenverkleidung 23 gebildet. Die Türinnenverkleidung 23 ist hierbei als insbesondere vergleichsweise großflächiges Element vorgesehen und wird mit dem Aggregateträger 10 zur Montage an der Fahrzeugtür verbunden bzw. relativ zu diesem fixiert. Hierbei kann die Türinnenverkleidung 23 aus einer Mehrzahl von verschiedenen Elementen bestehen, insbesondere verschiedene bzw. verschiedenfarbige Oberflächenbereiche aufweisen, jedoch ist erfindungsgemäß die Türinnenverkleidung 23 im Wesentlichen in der ungefähren Größe des Aggregateträgers 10 vorgesehen, so dass nach der Montage sowohl des Aggregateträgers 10 als auch der Türinnenverkleidung 23 die Fahrzeugtür 20 im Wesentlichen fertig montiert ist, so dass die Montagekosten bzw. der Montageaufwand sehr stark reduzierbar ist. Die Türinnenverkleidung 23 weist hierbei einen Kartentaschenbereich 21 auf, der zusammen mit dem ersten Sichtseitenbereich des Aggregateträgers 10 die Kartentasche der Fahrzeugtür 20 bildet. Ferner weist die Türinnenverkleidung 23 einen Lautsprecherbereich 22 auf, der zusammen mit dem Aggregateträger 10 den Lautsprechermontageort der Fahrzeugtür 20 bildet.

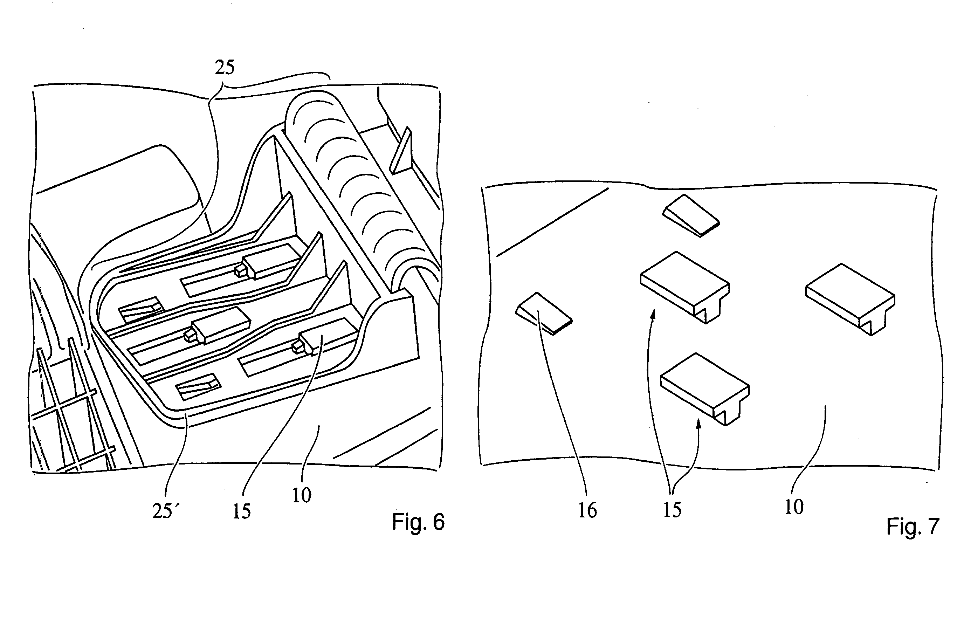

In den Figuren 6 bis 9 sind Details zur Befestigung des Türschlossmoduls 25 an dem Aggregateträger 10 dargestellt. Mittels den ersten Hinterschnittbefestigungselementen 15 wird ein entsprechendes Formteil 25' des Türschlossmoduls 25 zunächst in einer Vormontageposition (nicht dargestellt) relativ zum Aggregateträger 10 positioniert (d.h. im Wesentlichen auf die in Figur 7 besonders gut dargestellte Fläche bzw. Oberfläche des Aggregateträgers 10 aufgesetzt) und anschließend in die in den Figuren 6, 8 und 9 dargestellte Endmontageposition längsverschoben, wodurch die hinterschnittenen Bereiche der im Querschnitt im Wesentlichen T-förmig an die Oberfläche des Aggregateträgers 10 angeformten ersten Hinterschnittbefestigungselemente 15 mit entsprechenden Befestigungsbereichen des Formteils 25' derart zusammenwirken, dass eine Lösung lediglich noch entgegen der Montagelängsverschiebung möglich ist. Beim Positionieren des Formteils 25' in die Endmontageposition ist erfindungsgemäß insbesondere vorgesehen, dass es mittels der ersten Rastbefestigungselemente 16 zu einer Verrastung des Formteils 25' und damit des Türschlossmoduls 25 mit dem Aggregateträger 10 kommt. Diese Verrastung wird mittels einer Schrägfläche des ersten Rastbefestigungselements 16 erzielt, die zu einer Auslenkung eines Teils des Formteils 25' während der Längsverschiebung bei der Montage des Türschlossmoduls 25 sowie zu einer Einrastbewegung entgegen dieser Auslenkung beim Erreichen der Endmontageposition führt.

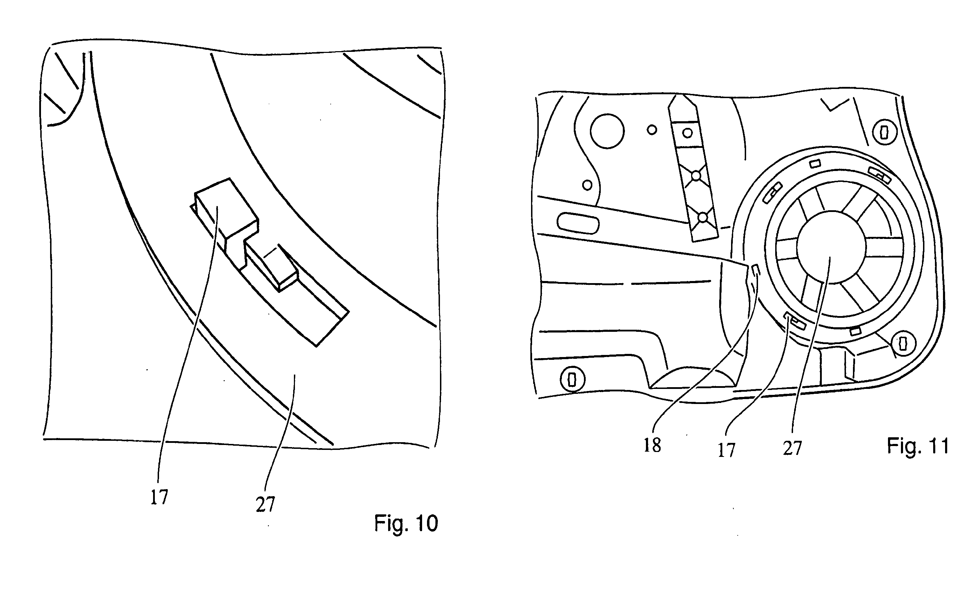

In im Wesentlichen entsprechender Weise sind in den Figuren 10 bis 13 Details zur Befestigung des Lautsprechermoduls 27 an dem Aggregateträger 10 dargestellt. Mittels den zweiten Hinterschnittbefestigungselementen 17 wird das Lautsprechermodul 27 zunächst in einer Vormontageposition (nicht dargestellt) relativ zum Aggregateträger 10 positioniert und anschließend in die Endmontageposition gedreht (in der Art eines Bajonettverschlusses), wodurch die hinterschnittenen Bereiche der im Querschnitt im Wesentlichen T-förmig oder L-förmig an die Oberfläche des Aggregateträgers 10 angeformten zweiten Hinterschnittbefestigungselemente 17 mit entsprechenden Befestigungsbereichen des Lautsprechermoduls 27 derart zusammenwirken, dass eine Lösung lediglich noch entgegen der Montagedrehung möglich ist. Beim Positionieren des Lautsprechermoduls 27 in die Endmontageposition ist erfindungsgemäß insbesondere vorgesehen, dass es mittels der zweiten Rastbefestigungselemente 18 zu einer Verrastung des Lautsprechermoduls 27 mit dem Aggregateträger 10 kommt. Diese Verrastung wird ebenfalls mittels einer Schrägfläche des zweiten Rastbefestigungselements 18 erzielt.

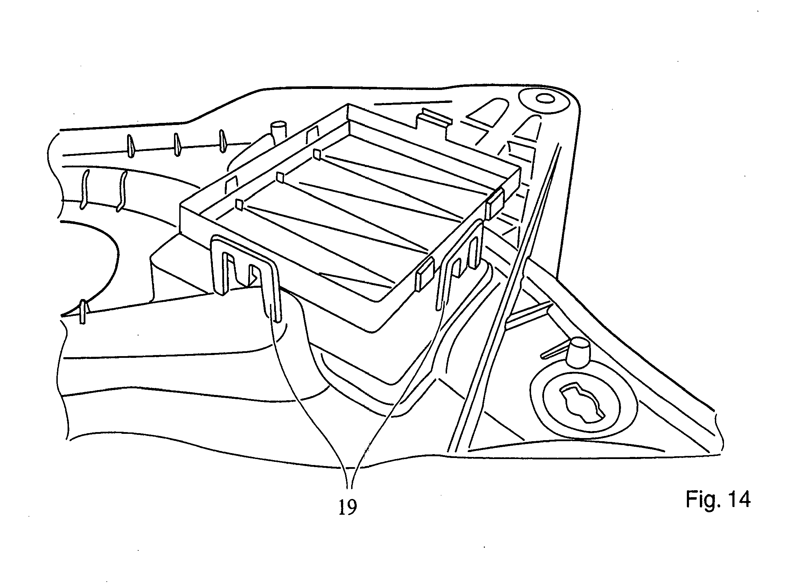

In im Wesentlichen entsprechender Weise sind in den Figuren 14 bis 17 Details zur Befestigung des Steuergerätegehäuses 29 bzw. des Steuergerätemoduls 29 an dem Aggregateträger 10 dargestellt. Mittels eines dritten Rastbefestigungselementes 19 kommt es zu einer Verrastung des Steuergerätegehäuses 29 bzw. des Steuergerätemoduls 29 mit dem Aggregateträger 10, wobei das Steuergerätegehäuse 29 bzw. das Steuergerätemodul 29 ein mit dem dritten Rastbefestigungselement 19 zusammenwirkendes Rastelement 29' aufweist, das bei einer im Wesentlichen senkrecht zur Haupterstreckungsebene des Aggregateträgers 10 vorgesehenen Montagebewegung des Steuergerätegehäuses 29 bzw. des Steuergerätemoduls 29 zunächst zu einer Auslenkbewegung des dritten Rastbefestigungselementes 19 führt (nicht dargestellt) und anschließend durch Einrasten des dritten Rastbefestigungselementes 19 zur Verrastung in der Endmontageposition des Steuergerätegehäuses 29 bzw. des Steuergerätemoduls 29 führt.

### Bezugszeichenliste

- 10: Aggregateträger
- 11: erste Hauptseite
- 12: zweite Hauptseite
- 13: erster Sichtseitenbereich
- 14: zweiter Sichtseitenbereich
- 15: erstes Hinterschnittbefestigungselement
- 16: erstes Rastbefestigungselement
- 17: zweites Hinterschnittbefestigungselement
- 18: zweites Rastbefestigungselement
- 19: drittes Rastbefestigungselement
- 20: Fahrzeugtür
- 21: Kartentaschenbereich
- 22: Lautsprecherbereich
- 23: Türinnenverkleidung
- 25: Türschlossmodul
- 27: Lautsprechermodul / Lautsprecher
- 29: Steuergerätegehäuse / Steuergerätemodul
- 29': Rastelement

## Patentansprüche

1. Fahrzeugtür (20) mit einem Aggregateträger (10), wobei der Aggregateträger (10) zur Aufnahme von Funktionskomponenten, insbesondere einer Fahrzeugtür (20), und zum Einbau in ein Kraftfahrzeug vorgesehen ist, wobei der Aggregateträger (10) eine dem Innenraum des Fahrzeugs zugewandte erste Hauptseite (11) aufweist und wobei der Aggregateträger (10) eine gegenüberliegende zweite Hauptseite (12) aufweist, wobei der Aggregateträger (10) im Bereich der ersten Hauptseite (11) wenigstens einen nach der Komplettmontage vom Innenraum des Fahrzeugs her sichtbaren Sichtseitenbereich (13, 14) aufweist, wobei die Fahrzeugtür (20) eine im Wesentlichen einzige großflächige Türinnenverkleidung (23) aufweist, wobei die Türinnenverkleidung (23) zusammen mit dem Aggregateträger (10) mindestens 80%, bevorzugt mindestens 90%, der Sichtseite definiert, wobei die Sichtseitenbereiche (13, 14) im Oberflächenbereich ein die Sichtseite bildendes Folienmaterial aufweisen, **dadurch gekennzeichnet, dass** als Folienmaterial der Sichtseitenbereiche (13, 14) ein Polypropylen-Folienmaterial vorgesehen ist, wobei der Aggregateträger (10) auf der ersten und/oder der zweiten Hauptseite (11, 12) eine Mehrzahl von Hinterschnittbefestigungselementen (15, 17) und Rastbefestigungselemente (16, 18, 19) aufweist.

2. Fahrzeugtür (20) nach Anspruch 1, **dadurch gekennzeichnet, dass** der Aggregateträger (10) im Wesentlichen aus einem Material geformt vorgesehen ist, wobei insbesondere die Hinterschnittbefestigungselemente (15, 17) und die Rastbefestigungselemente (16, 18, 19) aus dem Material des Aggregateträgers vorgesehen sind.

3. Fahrzeugtür (20) nach einem der vorhergehenden Ansprüche, **dadurch gekennzeichnet, dass** das Material des Aggregateträgers als ein faserverstärktes oder einen Füllstoff aufweisendes Material vorgesehen ist, insbesondere ein Polypropylenmaterial und insbesondere mit Langfasem, besonders bevorzugt Glasfasern.

4. Fahrzeugtür (20) nach einem der vorhergehenden Ansprüche, **dadurch gekennzeichnet, dass** das Folienmaterial eine Narbung aufweist.

5. Fahrzeugtür (20) nach einem der vorhergehenden Ansprüche, **dadurch gekennzeichnet, dass** die Hinterschnittbefestigungselemente (15, 17) und die Rastbefestigungselemente (16, 18, 19) zur Bewirkung einer Fixierung einer der Funktionskomponenten ausgehend von einer Vormontageposition in eine Endmontageposition relativ zum Aggregateträger (10) durch Längsverschiebung oder durch Drehung vorgesehen sind.

6. Fahrzeugtür (20) nach einem der vorhergehenden Ansprüche, **dadurch gekennzeichnet, dass** als Funktionskomponenten wenigstens ein Türschlossmodul und/oder ein Lautsprecher und/oder ein Steuergerätegehäuse vorgesehen ist.

## Claims

1. A vehicle door (20) comprising a door module assembly (10) wherein the door module assembly (10) is provided for accommodating functional components, particularly a vehicle door (20), and for installation into a motor vehicle, wherein the door module assembly (10) comprises a first main side (11) facing the interior of the vehicle and wherein the door module assembly (10) comprises an oppositely disposed second main side (12), wherein the door module assembly (10) comprises at least one visible side region (13, 14) in the area of the first main side (11) which is visible from the interior of the vehicle after complete assembly, wherein the vehicle door (20) comprises a substantially largescale interior door trim panel (23), wherein the interior door trim panel (23) together with the door module assembly (10) define at least 80%, preferentially at least 90%, of the visible side, wherein the visible side regions (13, 14) have a foil material forming the visible side within the surface area, **characterized in that** a polypro-pylene foil is provided as the foil material of the visible side regions (13, 14), wherein the door module assembly (10) comprises a plurality of undercut fixing elements (15, 17) and engaging fixing elements (16, 18, 19) on the first and/or second main side (11, 12).

2. The vehicle door (20) according to claim 1, **characterized in that** the door module assembly (10) is substantially formed from one material, wherein particularly the undercut fixing elements (15, 17) and the engaging fixing elements (16, 18,19) are provided from the material of the door module assembly.

3. The vehicle door (20) according to one of the preceding claims, **characterized in that** the material of the door module assembly is provided as a fiber-reinforced material or a material comprising filler, particularly a polypropylene material and particularly of long fibers, particularly preferentially glass fibers.

4. The vehicle door (20) according to any one of the preceding claims, **characterized in that** the foil material exhibits a grain.

5. The vehicle door (20) according to any one of the preceding claims, **characterized in that** the undercut fixing elements (15, 17) and the engaging fixing elements (16, 18, 19) are provided to effect a fixing of one of the functional components from a pre-assembly position into a final assembly position relative to the door module assembly (10) by means of longitudinal displacement or by means of rotation.

6. The vehicle door (20) according to any one of the preceding claims, **characterized in that** at least one door lock module and/or one speaker and/or one control unit housing is provided as functional components.

## Revendications

1. Porte de véhicule (20) comprenant un support d'équipement (10), dans laquelle le support d'équipement (10) est prévu pour recevoir des composants fonctionnels, en particulier d'une porte de véhicule (20) et pour l'intégration dans un véhicule automobile, dans laquelle le support d'équipement (10) comporte un premier côté principal (11) tourné vers l'habitacle du véhicule, et dans laquelle le support d'équipement (10) comporte un second côté principal (12) à l'opposé, dans laquelle le support d'équipement (10) comporte dans la région du premier côté principal (11) au moins une zone de côté visible (13, 14) visible depuis l'habitacle du véhicule après montage complet, dans laquelle la porte de véhicule (20) comporte un habillage intérieur de porte (23) sensiblement unique et à grande surface, ledit habillage intérieur de porte (23) définissant, conjointement avec le support d'équipement (10), au moins 80 % et de préférence au moins 90 % du côté visible, et les zones de côté visibles (13, 14) comportent dans la région de surface un matériau en feuille formant le côté visible,
**caractérisée en ce qu'**il est prévu à titre de matériau en feuille des zones de côté visibles (13, 14) un matériau en feuille à base de polypropylène, et le support d'équipement (10) comporte sur le premier et/ou sur le second côté principal (11, 12) une pluralité d'éléments de fixation (15, 17) en contre-dépouille et d'éléments de fixation (16, 18, 19) à enclenchement.

2. Porte de véhicule (20) selon la revendication 1, **caractérisée en ce que** le support d'équipement (10) est conformé sensiblement à partir d'un matériau, dans laquelle les éléments de fixation (15, 17) en contre-dépouille et les éléments de fixation (16, 18, 19) à enclenchement sont réalisés à partir du matériau du support d'équipement.

3. Porte de véhicule (20) selon l'une des revendications précédentes, **caractérisée en ce que** le matériau du support d'équipement est prévu comme un matériau renforcé par des fibres ou un matériau comportant un produit de charge, en particulier un matériau à base de polypropylène et en particulier avec des fibres longues, de façon particulièrement préférée des fibres de verre.

4. Porte de véhicule (20) selon l'une des revendications précédentes, **caractérisée en ce que** le matériau en feuille comporte une finition granitée.

5. Porte de véhicule (20) selon l'une des revendications précédentes, **caractérisée en ce que** les éléments de fixation (15, 17) en contre-dépouille et les éléments de fixation (16, 18, 19) à enclenchement sont prévus pour provoquer une fixation de l'un des composants fonctionnels en partant d'une position de montage préliminaire par translation longitudinale ou par rotation par rapport au support d'équipement (10) jusque dans une position de montage finale.

6. Porte de véhicule (20) selon l'une des revendications précédentes, **caractérisée en ce qu'**il est prévu à titre de composant fonctionnel au moins un module formant serrure de porte et/ou un haut-parleur et/ou un boîtier pour dispositif de commande.
